# EUROPÄISCHE PATENTSCHRIFT

(11) **EP 3 430 325 B1**
(45) Veröffentlichungstag und Bekanntmachung des Hinweises auf die Patenterteilung: **28.12.2022**
(21) Anmeldenummer: 17716133.8
(22) Anmeldetag: 13.03.2017
(51) Int. Cl.: F25B 9/00, C09K 5/04, F24F 3/00

(54) **PRÜFKAMMER**
TEST CHAMBER
CHAMBRE D'ESSAI

(30) Priorität: 16.03.2016 DE 102016204378
(43) Veröffentlichungstag der Anmeldung: 23.01.2019
(73) Patentinhaber: Weiss Technik GmbH, 35447 Reiskirchen (DE)
(72) Erfinder: HAACK, Christian, 35037 Marburg (DE); KLEE, Gerald, 35325 Muecke (DE)
(74) Vertreter: advotec.
(86) Internationale Anmeldenummer: PCT/EP2017/055863
(87) Internationale Veröffentlichungsnummer: WO 2017/157864

(56) Entgegenhaltungen:
- WO-A1-97/07181
- CN-A- 101 914 368
- DE-A1- 4 116 274
- DE-A1-102005 014 552
- DE-A1-102014 104 110
- DE-C1- 19 654 790
- US-A- 5 351 499
- US-A- 5 736 063
- US-A- 5 744 052
- US-A1- 2016 018 135

## Beschreibung

Die Erfindung betrifft eine Prüfkammer zur Konditionierung von Luft, umfassend einen gegenüber einer Umgebung verschließbaren und temperaturisolierten Prüfraum zur Aufnahme von Prüfgut, und eine Temperiervorrichtung zur Temperierung des Prüfraums, wobei mittels der Temperiervorrichtung eine Temperatur in einem Temperaturbereich von -80 °C bis +180 °C, vorzugsweise -100 °C bis +200 °C, innerhalb des Prüfraums ausbildbar ist, wobei die Temperiervorrichtung eine Kühleinrichtung mit einem Kühlkreislauf mit einem Kältemittel, einem Wärmeübertrager, der in dem Prüfraum angeordnet ist, einem Verdichter, einem Kondensator und einem Expansionsorgan aufweist.

Derartige Prüfkammern werden regelmäßig zur Überprüfung von physikalischen und/oder chemischen Eigenschaften von Gegenständen, insbesondere Vorrichtungen eingesetzt. So sind Temperaturprüfschränke oder Klimaprüfschränke bekannt, innerhalb derer Temperaturen in einem Bereich von -50 °C bis +180 °C eingestellt werden können. Bei Klimaprüfschränken können ergänzend gewünschte Klimabedingungen eingestellt werden, denen dann die Vorrichtung bzw. das Prüfgut über einen definierten Zeitraum ausgesetzt wird. Derartige Prüfkammern sind regelmäßig bzw. teilweise als ein mobiles Gerät ausgebildet, welches lediglich mit erforderlichen Versorgungsleitungen mit einem Gebäude verbunden ist und alle zur Temperierung und Klimatisierung erforderlichen Baugruppen umfasst. Eine Temperierung eines das zu prüfende Prüfgut aufnehmenden Prüfraums erfolgt regelmäßig in einem Umluftkanal innerhalb des Prüfraums. Der Umluftkanal bildet einen Luftbehandlungsraum im Prüfraum aus, in dem Wärmetauscher zur Erwärmung oder Kühlung der den Umluftkanal bzw. den Prüfraum durchströmenden Luft angeordnet sind. Dabei saugt ein Lüfter bzw. ein Ventilator die im Prüfraum befindliche Luft an und leitet sie im Umluftkanal zu den jeweiligen Wärmetauschern. Das Prüfgut kann so temperiert oder auch einem definierten Temperaturwechsel ausgesetzt werden. Während eines Prüfintervalls kann dann beispielsweise eine Temperatur zwischen einem Temperaturmaximum und einem Temperaturminimum der Prüfkammer wechseln.

Das im Kühlkreislauf zirkulierende Kältemittel muss dabei so beschaffen sein, dass es in dem Kühlkreislauf innerhalb der vorgenannten Temperaturdifferenz verwendbar ist. Infolge gesetzlicher Bestimmungen darf das Kältemittel nicht wesentlich zum Ozonabbau in der Atmosphäre oder der globalen Erwärmung beitragen. So können im Wesentlichen keine fluorierten Gase oder chlorierten Stoffe als Kältemittel eingesetzt werden, weshalb natürliche Kältemittel bzw. Gase in Frage kommen. Darüber hinaus sollte das Kältemittel nicht brennbar sein, um u. a. eine Befüllung, einen Versand und einen Betrieb der Prüfkammer nicht aufgrund eventuell einzuhaltender Sicherheitsvorschriften zu erschweren. Auch verteuert sich die Herstellung eines Prüfkreislaufs durch die Verwendung eines brennbaren Kältemittels infolge der dadurch erforderlichen konstruktiven Maßnahmen. Unter Brennbarkeit wird hier die Eigenschaft des Kältemittels verstanden, mit Umgebungssauerstoff unter Freisetzung von Wärme zu reagieren. Ein Kältemittel ist insbesondere dann brennbar, wenn es in die Brandklasse C nach der europäischen Norm EN2 fällt.

Darüber hinaus sollte ein Kältemittel ein relativ geringes CO₂-Äquivalent aufweisen, d.h. ein relatives Treibhauspotential oder auch Global Warming Potential (GWP) sollte möglichst gering sein, um eine indirekte Schädigung der Umwelt durch das Kältemittel bei Freisetzung zu vermeiden. Das GWP gibt an, wieviel eine festgelegte Masse eines Treibhausgases zur globalen Erwärmung beiträgt, wobei als Vergleichswert Kohlendioxid dient. Der Wert beschreibt die mittlere Erwärmungswirkung über einen bestimmten Zeitraum, wobei hier zur Vergleichbarkeit 20 Jahre festgelegt werden. Zur Definition des relativen CO₂-Äquivalents bzw. GWPs wird auf den fünften Sachstandsbericht des Intergovernmental Panel on Climate Change (IPCC), Accessment Report, Appendix 8.A, Table 8.A.1 verwiesen.

Kohlenstoffdioxid bzw. Kohlendioxid ist als Kältemittel jedoch für die für eine Prüfkammer vorgesehenen Temperaturbereiche wenig geeignet, da aufgrund des Tripelpunktes des Kohlendioxids bei -56,6 °C eine Verwendung bei Temperaturen unterhalb von -55 °C für reines Kohlendioxid nicht möglich ist. Mischungen von Kohlendioxid mit beispielsweise Distickstoffoxid sind zwar als Kältemittel bis -70 °C nutzbar, jedoch schädigt Distickstoffoxid die Ozonschicht.

Aus der DE 196 54 790 C1, die dem Oberbegriff des Anspruchs 1 entspricht, ist ein Klimaprüfschrank bzw. eine Prüfkammer mit einem Temperaturbereich von -100°C bis +200°C bekannt. Diese Prüfkammer weist eine Kühleinrichtung und einen Kühlkreislauf mit einem Kältemittel, wie beispielsweise R23 auf.

Der vorliegenden Erfindung liegt daher die Aufgabe zugrunde, eine Prüfkammer vorzuschlagen, mit der Temperaturen bis mindestens -80 °C erzielbar sind, wobei die Prüfkammer ohne weiteren Kostenaufwand bei der Herstellung sicher und umweltfreundlich sein soll.

Diese Aufgabe wird durch eine Prüfkammer mit den Merkmalen des Anspruchs 1 gelöst.

Die erfindungsgemäße Prüfkammer zur Konditionierung von Luft umfasst einen gegenüber einer Umgebung verschließbaren und temperaturisolierten Prüfraum zur Aufnahme von Prüfgut und eine Temperiervorrichtung zur Temperierung des Prüfraums, wobei mittels der Temperiervorrichtung eine Temperatur in einem Temperaturbereich von -80 °C bis +180 °C, vorzugsweise -100 °C bis +200 °C, innerhalb des Prüfraums ausbildbar ist, wobei die Temperiervorrichtung eine Kühleinrichtung mit einem Kühlkreislauf mit einem Kältemittel, einem Wärmeübertrager, der in dem Prüfraum angeordnet ist, einem Verdichter, einem Kondensator und einem Expansionsorgan aufweist, wobei das Kältemittel ein nahezu azeotropisches und/oder zeotropes Kältemittelgemisch aus einem Masseanteil Kohlendioxid von 0,2 bis 0,8 und einem Masseanteil mindestens einer der Komponenten Pentafluorethan von 0,1 bis 0,4, Monofluorethan und/oder Fluormethan ist, wobei das Kältemittel ein relatives CO₂-Äquivalent, bezogen auf 20 Jahre, von < 3000, < 2500, bevorzugt < 500, besonders bevorzugt < 10, aufweist.

Bei der erfindungsgemäßen Prüfkammer wird durch eine Temperaturisolierung von Seitenwänden, Bodenwänden und Deckenwänden ein Wärmeaustausch mit einer Umgebung des Prüfraums weitestgehend vermieden. Der Wärmeübertrager des Kühlkreislaufes ist innerhalb des Prüfraums bzw. in einem Luftbehandlungsraum des Prüfraums angeordnet, so dass von einem Lüfter umgewälzte Luft mit dem Wärmeübertrager in Kontakt gelangen kann. So wird es möglich, eine umgewälzte Luftmenge des Prüfraums mittels der Kühleinrichtung über den Wärmeübertrager im Prüfraum abzukühlen. Der Wärmeübertrager ist wiederum an den Kühlkreislauf angeschlossen bzw. in diesem integriert, so dass das im Kühlkreislauf zirkulierende Kältemittel durch den Wärmeübertrager strömt. Die Kühleinrichtung weist weiter den Verdichter, welcher beispielsweise ein Kompressor sein kann, sowie den in Strömungsrichtung des Kältemittels dem Verdichter nachfolgend angeordneten Kondensator für das verdichtete Kältemittel auf. Das verdichtete Kältemittel, welches nach der Verdichtung unter einem hohen Druck steht und im Wesentlichen gasförmig vorliegt, kondensiert im Kondensator und liegt dann im Wesentlichen in einem flüssigen Aggregatzustand vor. Das flüssige Kältemittel strömt weiter über das Expansionsorgan, wobei es durch Expansion infolge eines Druckabfalls wiederum gasförmig wird. Dabei durchströmt es den Wärmeübertrager, der dadurch gekühlt wird. Nachfolgend wird das gasförmige Kältemittel wieder vom Verdichter angesaugt und verdichtet. Unter einem Expansionsorgan wird ein Expansionsventil, Drosselorgan, Drosselventil oder eine andere, geeignete Verengung einer Fluidleitung verstanden.

Wie sich herausgestellt hat, ist Kohlendioxid mit einem Masseanteil des Kältemittels verwendbar, wenn es mit einem Masseanteil mindestens einer der Komponenten Pentafluorethan, Monofluorethan, Fluormethan und/oder Propan gemischt ist. Dieses Kältemittelgemisch verhält sich dann wie ein azeotropes und/oder ein zeotropes Kältemittelgemisch. Ein azeotropes Gemisch ist ein aus zwei oder mehr Stoffen bestehendes Fluid, dessen Dampfphase dieselbe Zusammensetzung aufweist wie die flüssige Phase. Das azeotrope Gemisch hat einen eindeutigen Siedepunkt, welcher druckabhängig ist, und verhält sich wie ein Reinstoff. Im Gegensatz dazu ist ein zeotropes Gemisch ein aus zwei oder mehr Stoffen bestehendes Fluid, dessen Zusammensetzung von Dampfphase und flüssiger Phase sich im Dampf-Flüssigkeit-Gleichgewicht stets unterscheidet. Taulinie und Siedelinie berühren sich nicht. Bei konstantem Druck erfolgt der Phasenübergang zeotroper Gemische über einen Temperaturbereich, den sogenannten Temperaturgleit. Bei azeotropen Gemischen berühren sich Taulinie und Siedelinie mindestens in einem Punkt, d.h. an diesem Punkt ist die Zusammensetzung der Dampfphase und der flüssigen Phase gleich. Dampfdruck und Siedetemperatur eines zeotropen Gemisches liegen stets zwischen den Reinstoffdampfdrücken und Reinstoffsiedetemperaturen, während bei azeotropen Gemischen ein Druckmaximum bzw. Temperaturminimum oder ein Druckminimum bzw. Temperaturmaximum auftritt, welches außerhalb des durch die Reinstoffwerte begrenzten Bereichs liegen kann. Das Kältemittelgemisch kann auf einer Hochdruckseite des Kühlkreislaufs beim Einleiten in den Kondensator, in Abhängigkeit einer der Komponenten des Kältemittelgemischs, auch als ein zeotropes Kältemittelgemisch vorliegen.

Erfindungsgemäß ermöglicht das Kältemittelgemisch einen Einsatz der Prüfkammer in einem Temperaturbereich von -80 °C bis +100 °C, wobei das Kältemittelgemisch ein relatives CO₂-Äquivalent, bezogen auf 20 Jahre, von < 2500 aufweist und damit nur wenig umweltschädigend ist.

Wenn das Kältemittel nicht brennbar ist, wird es möglich, die Prüfkammer und insbesondere den Kühlkreislauf kostengünstiger auszubilden, da keine besonderen Sicherheitsvorkehrungen hinsichtlich Brennbarkeit des Kältemittels zu beachten sind. Das Kältemittel kann dann zumindest nicht der Brandklasse C und/oder der Kältemittelsicherheitsgruppe A1 zugeordnet werden. Darüber hinaus wird ein Versand bzw. ein Transport der Prüfkammer vereinfacht, da die Prüfkammer bereits vor einem Transport, unabhängig von der Transportart, mit dem Kältemittel befüllt werden kann. Bei brennbarem Kältemittel ist ggf. erst eine Befüllung im Rahmen einer Inbetriebnahme am Aufstellort möglich. Weiter ist eine Verwendung der nicht brennbaren Kältemittel bei im Prüfraum vorhandenen Zündquellen möglich. Sensoren zur Detektion einer entzündbaren Atmosphäre im Bereich des Wärmeübertragers im Prüfraum sind dann nicht erforderlich. Derartige Sensoren sind regelmäßig nicht temperaturstabil.

Vorteilhaft ist auch, wenn das Kältemittel in Kältemaschinenöl löslich ist. Wenn der Verdichter ein Kompressor ist, kann dieser in einem Ölsumpf angeordnet sein, weshalb dann zumindest abschnittsweise auch Öl im Kühlkreislauf transportiert werden kann. In Strömungsrichtung des Kältemittels kann im Kühlkreislauf ein Ölabscheider angeordnet sein, über den das Öl zum Kompressor zurückgeführt wird. Bei dem Öl kann es sich um POE-Öle, PAG-Öle, PFPE-Öle oder Mineralöl handeln.

Das Kältemittel kann ein Temperaturgleit von kleiner oder gleich 20 K, bevorzugt 5 K, besonders bevorzugt 1 K aufweisen. Dies kann dann der Fall sein, wenn das Kältemittel ein nahezu azeotropes Kältemittelgemisch ist. Das Kältemittel weist keinen Temperaturgleit auf, wenn es ein rein azeotropes Kältemittelgemisch ist. D.h. unter einem nahezu azeotropen Kältemittelgemisch wird hier ein Kältemittelgemisch mit einem Temperaturgleit von kleiner oder gleich 5 K, bevorzugt 1 K verstanden. Gemäß dieser Definition weisen dann zeotrope Kältemittelgemische einen Temperaturgleit von > 20 K bzw. > 1 K auf.

Ein Masseanteil von Kohlendioxid kann 0,35 bis 0,75, bevorzugt 0,4 bis 0,7, bei einer Mischung mit Pentafluorethan betragen. Als besonders vorteilhaft hat sich ein Masseanteil von Kohlendioxid von ca. 0,55 herausgestellt. Wenn es sich um ein binäres Kältemittelgemisch handelt, kann dieses sich vollständig zeotrop verhalten. Ein Temperaturgleit kann dann beispielsweise 14 K bis 18 K (bei 1 bar) betragen. Bei einem derartigen Temperaturgleit kann vorgesehen sein, dass der Kühlkreislauf an das Kältemittel stets konstruktiv, Verdichter, Rohre, Ventile und eine Regelung betreffend, angepasst ist.

Ein Masseanteil von Kohlendioxid kann 0,3 bis 0,7 und von Pentafluorethan 0,15 bis 0,35, bevorzugt von Kohlendioxid 0,4 bis 0,6 und von Pentafluorethan 0,2 bis 0,6, bei einer Mischung mit Difluormethan betragen.

Weiter ist es vorteilhaft, wenn eine Komponente Cyclopropan im Kältemittelgemisch enthalten ist und ein Masseanteil an Cyclopropan im Bereich von 0,03 bis 0,2 liegt. Darüber hinaus können in dem Kältemittelgemisch stoffliche Zusätze zur Detektion von Leckagen des Kühlkreislaufs enthalten sein. Die Zusätze können dabei aus den Stoffen Helium und Wasserstoff oder aus der Stoffgruppe der Kohlenwasserstoffe ausgewählt sein. Weiter können auch Geruchsstoffe oder anders zu detektierende Stoffe der Stoffgemische verwendet werden.

Der hier angegebenen Masseanteile können auch als Stoffmenge (mol) verstanden werden.

Die Temperiervorrichtung kann eine Heizeinrichtung mit einer Heizung und einem weiteren Wärmeübertrager aufweisen. Die Heizeinrichtung kann beispielsweise eine elektrische Widerstandsheizung sein, die den zweiten Wärmeübertrager beheizt, derart, dass über den zweiten Wärmeübertrager eine Temperaturerhöhung in dem Prüfraum ermöglicht wird. Wenn der erste Wärmeübertrager und der zweite Wärmeübertrager mittels einer Regeleinrichtung zur Kühlung oder Erwärmung der im Prüfraum umgewälzten Luft gezielt gesteuert werden können, kann mittels der Temperiervorrichtung dann innerhalb des Prüfraums eine Temperatur in dem Temperaturbereich von -80 °C bis +180 °C, vorzugsweise von -100 °C bis +200 °C, ausgebildet werden. Dabei kann unabhängig vom Prüfgut bzw. eines Betriebszustandes des Prüfgutes eine zeitliche Temperaturkonstanz von ± 0,3 bis ± 0,5 K während eines Prüfintervalls in dem Prüfraum ausgebildet werden. Unter einem Prüfintervall wird hier ein Zeitabschnitt eines vollständigen Prüfzeitraums verstanden, in dem das Prüfgut einer im Wesentlichen gleichbleibenden Temperatur oder Klimabedingung ausgesetzt wird. Der weitere Wärmeübertrager kann zusammen mit dem Wärmeübertrager des Kühlkreislaufs derart kombiniert sein, dass ein gemeinsamer Wärmeübertragerkörper ausgebildet ist, der von Kältemittel durchströmbar ist und der Heizelemente einer elektrischen Widerstandsheizung aufweist.

Die Kühleinrichtung kann einen weiteren Kühlkreislauf mit einem weiteren Kältemittel, einem weiteren Verdichter, einem weiteren Kondensator und einem weiteren Expansionsorgan aufweisen, wobei der weitere Kühlkreislauf mittels eines internen Wärmeübertragers mit dem Kondensator des Kühlkreislaufs gekoppelt sein kann. Folglich kann die Kühleinrichtung dann zwei in Reihe geschaltete Kreisläufe aufweisen, die eine sogenannte Kältekaskade ausbilden. Die weitere Kühleinrichtung bzw. der weitere Kühlkreislauf kann dann den Kondensator des ersten Kühlkreislaufs kühlen. So ist es dann möglich, im Prüfraum besonders niedrige Temperaturen auszubilden. Auch kann der weitere Verdichter im weiteren Kühlkreislauf ein Kompressor sein.

Der Kondensator kann mit einer Luftkühlung oder Wasserkühlung oder einer anderen Kühlflüssigkeit ausgebildet sein. Prinzipiell kann der Kondensator mit jedem geeigneten Fluid gekühlt werden. Wesentlich ist, dass die am Kondensator anfallende Wärmelast über die Luftkühlung oder Wasserkühlung so abgeführt wird, dass das Kältemittel so kondensieren kann, dass es vollständig verflüssigt ist.

In dem Kühlkreislauf kann eine Druckausgleichseinrichtung für das Kältemittel angeordnet sein, wobei bei einer im Kühlkreislauf gleichmäßig ausgebildeten Temperatur des Kältemittels von 20 °C ein Druck von < 40 bar, vorzugsweise < 35 bar im Kühlkreislauf ausgebildet sein kann. Sofern ein weiterer Kühlkreislauf vorhanden ist, kann dieser ebenfalls eine derartige Druckausgleichseinrichtung aufweisen. Da in dem Kühlkreislauf vergleichsweise hohe Temperaturdifferenzen im Betrieb vorliegen können, ist es besonders vorteilhaft, wenn die Druckausgleichseinrichtung diese ausgleichen kann. So können sehr große Temperaturschwankungen und damit eine Volumenänderung des Kältemittels in Abhängigkeit des jeweiligen Ausdehnungskoeffizienten des Kältemittels über die Druckausgleichseinrichtung kompensiert werden. Insbesondere kann vorgesehen sein, dass die Druckausgleichseinrichtung so ausgebildet ist, dass die Temperiervorrichtung stromlos eigensicher ist, d.h. dass keine Stillstandskühlung des Kältemittels erforderlich ist. Auch ist es möglich, den Kühlkreislauf bereits vor einem Transport der Prüfkammer vollständig und betriebsfertig zu befüllen.

So kann an eine Niederdruckseite des Kühlkreislaufs ein Kältemittelreservoir mit einem Drosselorgan bzw. einer Kapillare angeschlossen sein. Das Kältemittelreservoir kann dann eine Druckausgleichseinrichtung ausbilden, die beispielsweise ein Behälter ist, in dem sich Kältemittel sammeln kann. Eine Befüllung und Leerung des Behälters kann über das Drosselorgan erfolgen, so dass in Abhängigkeit einer Kondensations- oder Verdampfungsgeschwindigkeit des Kühlmittels ein zeitlich verzögerter Druckausgleich aufgrund eines verlangsamten Überströmens des Kältemittels über das Drosselorgan erfolgt.

In einer Hochdruckseite des Kühlkreislaufs in Strömungsrichtung nachfolgend dem Verdichter und vor dem Kondensator kann ein Gaskühler angeordnet sein. So wird es möglich, das vom Verdichter hochverdichtete und gasförmige Kältemittel von einem vergleichsweise hohen Temperaturniveau infolge der Verdichtung auf ein vergleichsweise niedrigeres Temperaturniveau abzukühlen. Durch den Gaskühler kann insbesondere bei dem verwendeten Kältemittelgemisch eine Kondensation bzw. Verflüssigung im Kondensator sichergestellt werden.

In dem Kühlkreislauf kann ein erster Bypass mit zumindest einem weiteren Drosselorgan bzw. einer Kapillare ausgebildet sein, wobei der erste Bypass den Verdichter in Strömungsrichtung nachfolgend dem Verdichter und vor dem Kondensator überbrücken kann, wobei über das weitere Drosselorgan eine Druckdifferenz zwischen einer Hochdruckseite und einer Niederdruckseite des Kühlkreislaufs ausgleichbar sein kann. Der erste Bypass kann ergänzend mit einem einstellbaren oder regelbaren Ventil, beispielsweise einem Magnetventil, ausgestattet sein. Durch die Verbindung von Hochdruckseite und Niederdruckseite über das weitere Drosselorgan kann sichergestellt werden, dass bei einem Anlagenstillstand das hochverdichtete und gasförmige Kältemittel von der Hochdruckseite allmählich auf die Niederdruckseite des Kühlkreislaufs strömt. So wird auch bei geschlossenem Expansionsorgan sichergestellt, dass ein allmählicher Druckausgleich zwischen der Hochdruckseite und der Niederdruckseite erfolgt. Ein Querschnitt des weiteren Drosselorgans kann dabei so bemessen sein, dass ein Überströmen des Kältemittels von der Hochdruckseite zur Niederdruckseite einen normalen Betrieb der Kühleinrichtung nur unwesentlich beeinflusst.

Weiter kann in dem Kältekreislauf ein zweiter Bypass mit zumindest einem ersten Magnetventil ausgebildet sein, wobei der zweite Bypass den Verdichter in Strömungsrichtung nachfolgend dem Kondensator und vor dem Expansionsorgan überbrücken kann, wobei über das erste Magnetventil Kältemittel so dosierbar sein kann, dass eine Sauggastemperatur und/oder ein Sauggasdruck des Kältemittels auf einer Niederdruckseite des Kühlkreislaufs vor dem Verdichter regelbar sein kann. Dadurch kann u.a. verhindert werden, dass der Verdichter, bei dem es sich beispielsweise um einen Kompressor handeln kann, eventuell überhitzt und damit beschädigt wird. Folglich kann über den zweiten Bypass durch Betätigung des ersten Magnetventils vor dem Verdichter befindliches gasförmiges Kältemittel durch Zudosieren von noch flüssigem Kältemittel gekühlt werden. Eine Betätigung des ersten Magnetventils kann durch eine Steuervorrichtung erfolgen, die ihrerseits mit einem Druck- und/oder Temperatursensor in dem Kühlkreislauf vor dem Verdichter gekoppelt ist. Besonders vorteilhaft ist es, wenn über den zweiten Bypass eine Sauggastemperatur von ≤ 30 °C eingestellt werden kann. Auch kann das Kältemittel so dosiert werden, dass eine Betriebsdauer des Verdichters regelbar ist. Prinzipiell ist es nachteilig, wenn der Verdichter bzw. Kompressor vielfach eingeschaltet und ausgeschaltet wird. Eine Lebensdauer eines Kompressors kann verlängert werden, wenn dieser längere Zeitabschnitte in Betrieb ist. Über den zweiten Bypass kann Kältemittel an dem Kompressor vorbeigeführt werden, um beispielsweise ein automatisches Abschalten des Kompressors zu verzögern und eine Betriebsdauer des Kompressors zu verlängern.

In dem Kältekreislauf kann auch ein dritter Bypass mit zumindest einem zweiten Magnetventil ausgebildet sein, wobei der dritte Bypass das Expansionsorgan in Strömungsrichtung vor dem Kondensator überbrücken kann, wobei über das zweite Magnetventil Kältemittel so dosierbar sein kann, dass eine Sauggastemperatur und/oder ein Sauggasdruck des Kältemittels auf einer Niederdruckseite des Kühlkreislaufs vor dem Verdichter regelbar sein kann. Der dritte Bypass kann ebenfalls ein Drosselorgan bzw. eine Kapillare aufweisen, das bzw. die ein Überströmen von Kältemittel verzögert.

Die Temperiervorrichtung kann eine Regeleinrichtung mit zumindest einem Drucksensor und/oder zumindest einem Temperatursensor in dem Kühlkreislauf umfassen, wobei Magnetventile mittels der Regeleinrichtung in Abhängigkeit einer gemessenen Temperatur bzw. eines Drucks betätigbar sein können. Die Regeleinrichtung kann Mittel zur Datenverarbeitung umfassen, die Datensätze von Sensoren verarbeiten und die Magnetventile ansteuern. Eine Regelung einer Funktion der Kühleinrichtung kann dann auch, beispielsweise über ein entsprechendes Computerprogramm, an das verwendete Kältemittel angepasst sein. Weiter kann die Regeleinrichtung eine Betriebsstörung signalisieren und ggf. eine Abschaltung der Prüfkammer veranlassen, um die Prüfkammer oder das Prüfgut von einer Beschädigung durch kritische oder unerwünschte Betriebszustände der Prüfkammer zu schützen.

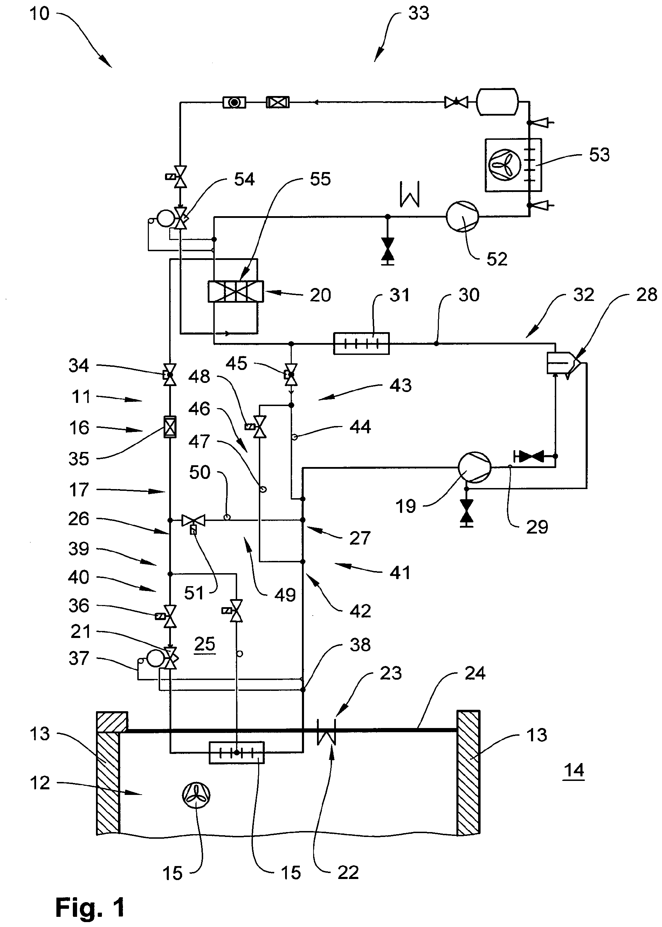

Nachfolgend wird eine bevorzugte Ausführungsform der Erfindung unter Bezugnahme auf die beigefügte Zeichnung näher erläutert.

Die **Figur** zeigt eine schematische Darstellung einer Prüfkammer 10 mit einem Schaltplan einer Temperiervorrichtung 11. Die Prüfkammer 10 umfasst einen hier nur abschnittsweise dargestellten Prüfraum 12, der durch temperaturisolierte Wände 13 gegenüber einer Umgebung 14 begrenzt und temperaturisoliert ist. Innerhalb des Prüfraums 12 ist ein Lüfter 15 angeordnet.

Die Temperiervorrichtung 11 umfasst eine Kühleinrichtung 16 mit einem Kühlkreislauf 17, innerhalb dem ein Kältemittel zirkulieren kann. Bei dem Kältemittel handelt es sich um ein nahezu azeotropes Kältemittelgemisch aus einem Masseanteil Kohlendioxid von 0,2 bis 0,8 und einem Masseanteil mindestens einer der Komponenten Pentafluorethan von 0,1 bis 0,4, Monofluorethan und/oder Fluormethan , wobei das Kältemittel ein relatives CO₂-Äquivalent, bezogen auf 20 Jahre von < 10 aufweist.

Weiter umfasst die Kühleinrichtung 16 einen Wärmeübertrager 18, der in dem Prüfraum 12 angeordnet ist, einen Kompressor 19, einen Kondensator 20 und ein Expansionsorgan 21. In dem Prüfraum 12 ist darüber hinaus ein weiterer Wärmeübertrager 22 einer Heizeinrichtung 23 der Temperiervorrichtung 11 angeordnet. So kann mittels der Temperiervorrichtung 11 innerhalb des Prüfraums 12 eine Temperatur in einem Temperaturbereich von -80 °C bis +180 °C und auch von -100 °C bis +200 °C ausgebildet werden. Eine Linie 24 zeigt eine räumliche Trennung zwischen einem Maschinenraum 25 und dem Prüfraum 12 an.

Der Kühlkreislauf 17 weist eine Hochdruckseite 26, die in Strömungsrichtung des Kältemittels vom Kompressor 19 zum Expansionsorgan 21 sowie eine Niederdruckseite 27, die vom Expansionsorgan 21 zum Kompressor 19 verläuft, auf. Im Kühlkreislauf 17, dem Kompressor 19 nachgeordnet, sind eine Ölabscheideeinrichtung 28 und ein Temperatorsensor 29 angeordnet. Im weiteren Verlauf des Kühlkreislaufs 17 nachfolgend der Ölabscheideeinrichtung 28 ist ein Drucksensor 30 angeordnet und dem nachfolgend ein Gaskühler 31. In einem Rohrabschnitt 32 vom Kompressor 19 bis zum Gaskühler 31 ist das Kältemittel gasförmig und weist eine vergleichsweise hohe Temperatur auf. Das von dem Kompressor 19 verdichtete Kältemittel fließt in dem Kühlkreislauf 17 zu dem Kondensator 20, der hier über einen weiteren Kühlkreislauf 33 gekühlt wird, derart, dass das gasförmige Kältemittel in dem Kondensator 20 verflüssigt wird. In Fließrichtung des Kältemittels folgen in dem Kühlkreislauf 17 nach dem Kondensator 20 ein Absperrventil 34 und ein Filtertrockner 35 zum Filtern und Trocknen des Kältemittels. Das Kältemittel gelangt danach in dem Kühlkreislauf 17 an ein Magnetventil 36 und das Expansionsorgan 21, welches über einen druckbeaufschlagten Rohrabschnitt 37 und einen Temperatursensor 38 selbstregelnd ausgebildet ist. In einem Rohrabschnitt 39 des Kühlkreislaufs 17 liegt das Kältemittel demnach im flüssigen Aggregatzustand vor. Das in Bezug auf den Wärmeübertrager 18 und den Kompressor 19 in einem Vorlauf 40 angeordnete Expansionsorgan 21 wird folglich über den Rohrabschnitt 37 und den Temperatursensor 38, welche mit einem Rücklauf 41 des Kühlkreislaufs 17 verbunden sind, geregelt. Durch die Expansion des Kältemittels nachfolgend dem Expansionsorgan 21 erfolgt eine Kühlung des Wärmeübertragers 18, wobei das Kältemittel in den gasförmigen Aggregatzustand übergeht und über den Rücklauf 41 bzw. einem Rohrabschnitt 42 zum Kompressor 19 geleitet wird.

In dem Kühlkreislauf 17 sind weiter ein erster Bypass 43 mit einem Drosselorgan 44 und einem Absperrventil 45 angeordnet. Der erste Bypass 43 überbrückt den Kompressor 19, so dass bei einem Stillstand des Kompressors 19 ein allmählicher Druckausgleich zwischen der Hochdruckseite 26 und der Niederdruckseite 27 über das Drosselorgan 44 erfolgt.

Ein zweiter Bypass 46 mit einem Drosselorgan 47 und einem Magnetventil 48 ist hier an den ersten Bypass 43 angeschlossen und überbrückt ebenfalls den Kompressor 19 vor dem Kondensator 20 und nachfolgend dem Gaskühler 31. Über das Magnetventil 28 kann dann Kältemittel von der Hochdruckseite 26 zur Niederdruckseite 27 strömen und so dosiert werden, dass eine Sauggastemperatur und ein Sauggasdruck in dem Rohrabschnitt 42 vor dem Kompressor 19 in dem für das Kältemittel optimalen Bereich liegen. Der erste Bypass 43 dient somit zum Überströmen von kaltem, expandierendem gasförmigem Kältemittel bei einem Anlagenstillstand und damit zum Druckausgleich. Der zweite Bypass 46 dient zum Überströmen von vergleichsweise heißem, gasförmigem Kältemittel in den Rücklauf 41 zur Regelung einer Sauggastemperatur vor dem Kompressor 19. Eine Sauggastemperatur kann hier ≤ 30 °C betragen.

Ein dritter Bypass 49 greift nachfolgend dem Kondensator 20 bzw. dem Filtertrockner 35 in den Kühlkreislauf 17 ein, derart, dass das Expansionsorgan 21 überbrückt wird, wobei über ein Drosselorgan 50 und ein Magnetventil 51 Kältemittel von der Hochdruckseite 26 zur Niederdruckseite 27 so dosierbar ist, dass eine Sauggastemperatur bzw. ein Sauggasdruck des Kältemittels auf der Niederdruckseite 27 vor dem Kompressor 19 regelbar ist. Im Gegensatz zum zweiten Bypass 46 ist das über den dritten Bypass 49 zudosierte Kältemittel flüssig, was insbesondere eine Absenkung der Sauggastemperatur in dem Rücklauf 41 nach Regelung durch das Magnetventil 51 erlaubt.

Der weitere Kühlkreislauf 33 umfasst einen weiteren Verdichter 52, einen weiteren Kondensator 53 und ein weiteres Expansionsorgan 54 sowie einen internen Wärmeübertrager 55, mittels dem eine Kühlung des Kondensators 20 bewerkstelligt wird.

## Patentansprüche

1. Prüfkammer (10) zur Konditionierung von Luft, umfassend einen gegenüber einer Umgebung verschließbaren und temperaturisolierten Prüfraum (12) zur Aufnahme von Prüfgut, und eine Temperiervorrichtung (11)zur Temperierung des Prüfraums, wobei mittels der Temperiervorrichtung eine Temperatur in einem Temperaturbereich von -80 °C bis +180 °C, vorzugsweise -100 °C bis +200 °C, innerhalb des Prüfraums ausbildbar ist, wobei die Temperiervorrichtung eine Kühleinrichtung (16) mit einem Kühlkreislauf (17) mit einem Kältemittel, einem Wärmeübertrager (18), der in dem Prüfraum angeordnet ist, einem Verdichter (19), einem Kondensator (20) und einem Expansionsorgan (21) aufweist,
**dadurch gekennzeichnet,**
**dass** das Kältemittel ein nahezu azeotropes und/oder zeotropes Kältemittelgemisch aus einem Masseanteil Kohlendioxid von 0,2 bis 0,8 und einem Masseanteil mindestens einer der Komponenten Pentafluorethan von 0,1 bis 0,4, Monofluorethan und/oder Fluormethan ist, wobei das Kältemittel ein relatives CO₂-Äquivalent, bezogen auf 20 Jahre, von < 3000, bevorzugt < 500, besonders bevorzugt < 10, aufweist.

2. Prüfkammer nach Anspruch 1,
**dadurch gekennzeichnet,**
**dass** das Kältemittel nicht brennbar ist.

3. Prüfkammer nach Anspruch 1 oder 2,
**dadurch gekennzeichnet,**
**dass** das Kältemittel in Kältemaschinenöl löslich ist.

4. Prüfkammer nach einem der vorangehenden Ansprüche,
**dadurch gekennzeichnet,**
**dass** das Kältemittel ein Temperaturgleit von kleiner oder gleich 20 K, bevorzugt 5 K, besonders bevorzugt 1 K aufweist.

5. Prüfkammer nach einem der vorangehenden Ansprüche,
**dadurch gekennzeichnet,**
**dass** ein Masseanteil Kohlendioxid 0,35 bis 0,75, bevorzugt 0,4 bis 0,7, bei einer Mischung mit Pentafluorethan beträgt.

6. Prüfkammer nach einem der Ansprüche 1 bis 4,
**dadurch gekennzeichnet,**
**dass** ein Masseanteil Kohlendioxid 0,3 bis 0,7 und Pentafluorethan 0,15 bis 0,35, bevorzugt Kohlendioxid 0,4 bis 0,6 und Pentafluorethan 0,2 bis 0,6, bei einer Mischung mit Difluormethan beträgt.

7. Prüfkammer nach einem der vorangehenden Ansprüche,
**dadurch gekennzeichnet,**
**dass** eine Komponente Cyclopropan, mit einem Masseanteil von 0,03 bis 0,2, ist.

8. Prüfkammer nach einem der vorangehenden Ansprüche,
**dadurch gekennzeichnet,**
**dass** die Temperiervorrichtung (11) eine Heizeinrichtung (23) mit einer Heizung und einem weiteren Wärmeübertrager (22) aufweist.

9. Prüfkammer nach einem der vorangehenden Ansprüche,
**dadurch gekennzeichnet,**
**dass** die Kühleinrichtung (16) einen weiteren Kühlkreislauf (33) mit einem weiteren Kältemittel, einem weiteren Verdichter (52), einem weiteren Kondensator (53), und einem weiteren Expansionsorgan (54) aufweist, wobei der weitere Kühlkreislauf mittels eines internen Wärmeübertragers (55) mit dem Kondensator (20) des Kühlkreislaufs (17) gekoppelt ist.

10. Prüfkammer nach einem der vorangehenden Ansprüche,
**dadurch gekennzeichnet,**
**dass** der Kondensator (20, 53) mit einer Luftkühlung oder Wasserkühlung oder einer anderen Kühlflüssigkeit ausgebildet ist.

11. Prüfkammer nach einem der vorangehenden Ansprüche,
**dadurch gekennzeichnet,**
**dass** in dem Kühlkreislauf (17) eine Druckausgleichseinrichtung für das Kältemittel angeordnet ist, wobei bei einer im Kühlkreislauf gleichmäßig ausgebildeten Temperatur des Kältemittels von 20 °C ein Druck von < 40 bar, vorzugsweise < 35 bar im Kühlkreislauf ausgebildet ist.

12. Prüfkammer nach einem der vorangehenden Ansprüche,
**dadurch gekennzeichnet,**
**dass** an eine Niederdruckseite (27) des Kühlkreislaufs (17) ein Kältemittelreservoir mit einem Drosselorgan angeschlossen ist.

13. Prüfkammer nach einem der vorangehenden Ansprüche,
**dadurch gekennzeichnet,**
**dass** in einer Hochdruckseite (26) des Kühlkreislaufs (17) in Strömungsrichtung nachfolgend dem Verdichter (19) und vor dem Kondensator (20) ein Gaskühler (31) angeordnet ist.

14. Prüfkammer nach einem der vorangehenden Ansprüche,
**dadurch gekennzeichnet,**
**dass** in dem Kühlkreislauf (17) ein erster Bypass (43) mit zumindest einem weiteren Drosselorgan (44) ausgebildet ist, wobei der erste Bypass den Verdichter (19) in Strömungsrichtung nachfolgend dem Verdichter und vor dem Kondensator (20) überbrückt, wobei über das weitere Drosselorgan eine Druckdifferenz zwischen einer Hochdruckseite (26) und einer Niederdruckseite (27) des Kühlkreislaufs ausgleichbar ist.

15. Prüfkammer nach einem der vorangehenden Ansprüche,
**dadurch gekennzeichnet,**
**dass** in dem Kühlkreislauf (17) ein zweiter Bypass (46) mit zumindest einem ersten Magnetventil (48) ausgebildet ist, wobei der zweite Bypass den Verdichter (19) in Strömungsrichtung von dem Kondensator (20) überbrückt, wobei über das erste Magnetventil Kältemittel so dosierbar ist, dass eine Sauggastemperatur und/oder ein Sauggasdruck des Kältemittels auf einer Niederdruckseite (27) des Kühlkreislaufs vor dem Verdichter regelbar ist.

16. Prüfkammer nach einem der vorangehenden Ansprüche,
**dadurch gekennzeichnet,**
**dass** in dem Kühlkreislauf (17) ein dritter Bypass (49) mit zumindest einem zweiten Magnetventil (51) ausgebildet ist, wobei der dritte Bypass das Expansionsorgan (21) in Strömungsrichtung nachfolgend dem Kondensator (20) und vor dem Expansionsorgan überbrückt, wobei über das zweite Magnetventil Kältemittel so dosierbar ist, dass eine Sauggastemperatur und/oder ein Sauggasdruck des Kältemittels auf einer Niederdruckseite (27) des Kühlkreislaufs vor dem Verdichter (19) regelbar ist.

17. Prüfkammer nach Anspruch 15 oder 16,
**dadurch gekennzeichnet,**
**dass** die Temperiervorrichtung (11) eine Regeleinrichtung mit zumindest einen Drucksensor (30) und/oder zumindest einen Temperatursensor (29, 38) in dem Kühlkreislauf (17) umfasst, wobei Magnetventile (36, 48, 51) mittels der Regeleinrichtung in Abhängigkeit einer gemessenen Temperatur bzw. eines Drucks betätigbar sind.

## Claims

1. A test chamber (10) for conditioning air, the test chamber (10) comprising a test space (12) which serves to receive test material and which can be closed off from the surroundings and which is temperature-insulated, and a temperature control device (11) for controlling the temperature of the test space, the temperature control device allowing a temperature in a temperature range of -80 °C to +180 °C, preferably -100 °C to +200 °C, to be established within the test space, the temperature control device having a cooling device (16) comprising a cooling circuit (17) with a refrigerant, a heat exchanger (18) disposed in the test space, a compressor (19), a condenser (20), and an expansion element (21),
**characterized in that**
the refrigerant is a nearly azeotropic and/or zeotropic refrigerant mixture of a mass percentage of carbon dioxide of 0.2 to 0.8 and a mass percentage of at least one of the components pentafluoroethane of 0.1 to 0.4, monofluoroethane and/or fluoromethane, the refrigerant having a relative CO₂ equivalent of < 3000, preferably < 500, in particular preferably < 10, with respect to 20 years.

2. The test chamber according to claim 1,
**characterized in that**
the refrigerant is nonflammable.

3. The test chamber according to claim 1 or 2,
**characterized in that**
the refrigerant is soluble in refrigerator oil.

4. The test chamber according to any one of the preceding claims,
**characterized in that**
the refrigerant has a temperature glide of equal to or less than 20 K, preferably 5 K, in particular preferably 1 K.

5. The test chamber according to any one of the preceding claims,
**characterized in that**
a mass percentage of carbon dioxide is 0.35 to 0.75, preferably 0.4 to 0.7, when mixed with pentafluoroethane.

6. The test chamber according to any one of claims 1 to 4,
**characterized in that**
a mass percentage of carbon dioxide is 0.3 to 0.7 and a mass percentage of pentafluoroethane is 0.15 to 0.35, preferably a mass percentage of carbon dioxide is 0.4 to 0.6 and a mass percentage of pentafluoroethane is 0.2 to 0.6, when mixed with difluoromethane.

7. The test chamber according to any one of the preceding claims,
**characterized in that**
one component is cyclopropane with a mass percentage of 0.03 to 0.2.

8. The test chamber according to any one of the preceding claims,
**characterized in that**
the temperature control device (11) has a heating device (23) comprising a heater and another heat exchanger (22).

9. The test chamber according to any one of the preceding claims,
**characterized in that**
the cooling device (16) has another cooling circuit (33) comprising another refrigerant, another compressor (52), another condenser (53), and another expansion element (54), the other cooling circuit being coupled with the condenser (20) of the cooling circuit (17) via an internal heat exchanger (55).

10. The test chamber according to any one of the preceding claims,
**characterized in that**
the condenser (20, 53) is cooled by air or by water or by another cooling fluid.

11. The test chamber according to any one of the preceding claims,
**characterized in that**
a pressure compensation device for the refrigerant is disposed in the cooling circuit (17), a pressure of < 40 bar, preferably < 35 bar, being established in the cooling circuit when the temperature of the refrigerant is a constant 20 °C throughout the cooling circuit.

12. The test chamber according to any one of the preceding claims,
**characterized in that**
a refrigerant reservoir having a throttle is connected to a low-pressure side (27) of the cooling circuit (17).

13. The test chamber according to any one of the preceding claims,
**characterized in that**
in a high-pressure side (26) of the cooling circuit (17), a gas cooler (31) is disposed downstream of the compressor (19) and upstream of the condenser (20) in the flow direction.

14. The test chamber according to any one of the preceding claims,
**characterized in that**
a first bypass (43) having at least another throttle (44) is formed in the cooling circuit (17), said first bypass bypassing the compressor (19) downstream of the compressor and upstream of the condenser (20) in the flow direction, wherein a pressure difference between a high-pressure side (26) and a low-pressure side (27) of the cooling circuit can be compensated by means of the other throttle.

15. The test chamber according to any one of the preceding claims,
**characterized in that**
a second bypass (46) having at least a first magnetic valve (48) is formed in the cooling circuit (17), the second bypass bypassing the compressor (19) upstream of the condenser (20) in the flow direction, the first magnetic valve allowing refrigerant to be metered in such a manner that a suction-gas temperature and/or a suction-gas pressure of the refrigerant can be controlled upstream of the compressor on a low-pressure side (27) of the cooling circuit.

16. The test chamber according to any one of the preceding claims,
**characterized in that**
a third bypass (49) having at least a second magnetic valve (51) is formed in the cooling circuit (17), the third bypass bypassing the expansion element (21) downstream of the condenser (20) and upstream of the expansion element in the flow direction, the second magnet valve allowing refrigerant to be metered in such a manner that a suction-gas temperature and/or a suction-gas pressure of the refrigerant can be controlled upstream of the compressor (19) on a low-pressure side (27) of the cooling circuit.

17. The test chamber according to claim 15 or 16,
**characterized in that**
the temperature control device (11) comprises a control unit having at least a pressure sensor (30) and/or at least a temperature sensor (29, 38) in the cooling circuit (17), wherein magnetic valves (36, 48, 51) can be actuated by means of the control unit as a function of a measured temperature and/or pressure.

## Revendications

1. Chambre d'essai (10) pour conditionner de l'air, la chambre d'essai (10) comprenant un espace d'essai (12), qui sert à recevoir une matière d'essai et qui peut être fermé par rapport à un environnement et qui est isolé thermiquement, et un dispositif de régulation de température (11) pour réguler la température de l'espace d'essai, le dispositif de régulation de température permettant d'établir une température dans une plage de température de -80 °C à +180 °C, de préférence de -100 °C à +200 °C, dans l'espace d'essai, le dispositif de régulation de température ayant un dispositif de refroidissement (16) comprenant un circuit de refroidissement (17) avec un réfrigérant, un échangeur de chaleur (18) disposé dans l'espace d'essai, un compresseur (19), un condensateur (20) et un élément de détente (21),
**caractérisée en ce que**
le réfrigérant est un mélange de réfrigérant presque azéotropique et/ou zéotropique d'un pourcentage de masse de dioxyde de carbone de 0,2 à 0,8 et un pourcentage de masse d'au moins un des composants pentafluoroéthane de 0,1 à 0.4, monofluoroéthane et/ou fluorométhane, le réfrigérant ayant un équivalent CO₂ relatif de < 3000, de préférence < 500, de préférence particulière < 10, par rapport à 20 ans.

2. Chambre d'essai selon la revendication 1,
**caractérisée en ce que**
le réfrigérant est incombustible.

3. Chambre d'essai selon la revendication 1 ou 2,
**caractérisée en ce que**
le réfrigérant est soluble dans l'huile frigorifique.

4. Chambre d'essai selon l'une quelconque des revendications précédentes,
**caractérisée en ce que**
le réfrigérant a un glissement de température égal ou inférieur à 20 K, de préférence 5 K, de préférence particulière 1 K.

5. Chambre d'essai selon l'une quelconque des revendications précédentes,
**caractérisée en ce**
**qu'**un pourcentage de masse de dioxyde de carbone est 0,35 à 0,75, de préférence 0,4 à 0,7, lors du mélange avec pentafluoroéthane.

6. Chambre d'essai selon l'une quelconque des revendications 1 à 4, **caractérisée en ce**
**qu'**un pourcentage de masse de dioxyde de carbone est 0,3 à 0,7 et un pourcentage de masse de pentafluoroéthane est 0,15 à 0,35, de préférence un pourcentage de masse de dioxyde de carbone est 0,4 à 0,6 et un pourcentage de masse de pentafluoroéthane est 0,2 à 0,6, lors du mélange avec difluorométhane.

7. Chambre d'essai selon l'une quelconque des revendications précédentes,
**caractérisée en ce**
**qu'**un composant est le cyclopropane à un pourcentage de masse de 0,03 à 0,2.

8. Chambre d'essai selon l'une quelconque des revendications précédentes,
**caractérisée en ce que**
le dispositif de régulation de température (11) a un dispositif de chauffage (23) comprenant un chauffage et un autre échanger de chaleur (22).

9. Chambre d'essai selon l'une quelconque des revendications précédentes,
**caractérisée en ce que**
le dispositif de refroidissement (16) a un outre circuit de refroidissement (33) comprenant un autre réfrigérant, un autre compresseur (52), un autre condensateur (53) et un autre élément de détente (54), l'autre circuit de refroidissement étant couplé avec le condensateur (20) du circuit de refroidissement (17) par l'intermédiaire d'un échangeur de chaleur interne (55).

10. Chambre d'essai selon l'une quelconque des revendications précédentes,
**caractérisée en ce que**
le condensateur (20, 53) est refroidi par l'air ou par l'eau ou par un autre fluide de refroidissement.

11. Chambre d'essai selon l'une quelconque des revendications précédentes,
**caractérisée en ce**
**qu'**un dispositif de compensation de pression pour le réfrigérant est disposé dans le circuit de refroidissement (17), une pression de < 40 bar, de préférence < 35 bar, étant établie dans le circuit de refroidissement quand une température constante du réfrigérant de 20 °C est établie dans le circuit de refroidissement.

12. Chambre d'essai selon l'une quelconque des revendications précédentes,
**caractérisée en ce**
**qu'**un réservoir de réfrigérant ayant un élément d'étranglement est relié à un côté de basse pression (27) du circuit de refroidissement (17).

13. Chambre d'essai selon l'une quelconque des revendications précédentes,
**caractérisée en ce que**
dans un côté de haute pression (26) du circuit de refroidissement (17), un refroidisseur de gaz (31) est disposé en aval du compresseur (19) et en amont du condensateur (20) dans le sens d'écoulement.

14. Chambre d'essai selon l'une quelconque des revendications précédentes,
**caractérisée en ce**
**qu'**une première dérivation (43) ayant au moins un autre élément d'étranglement (44) est formée dans le circuit de refroidissement (17), la première dérivation contournant le compresseur (19) en aval du compresseur et en amont du condensateur (20) dans le sens d'écoulement, une différence de pression entre un côté de haute pression (26) et un côté de basse pression (27) du circuit de refroidissement pouvant être compensée au moyen de l'autre élément d'étranglement.

15. Chambre d'essai selon l'une quelconque des revendications précédentes,
**caractérisée en ce**
**qu'**une deuxième dérivation (46) ayant au moins une première vanne magnétique (48) est formée dans le circuit de refroidissement (17), la deuxième dérivation contournant le compresseur (19) en amont du condensateur (20) dans le sens d'écoulement, la première vanne magnétique permettant de doser le réfrigérant de telle manière qu'une température de gaz d'aspiration et/ou une pression de gaz d'aspiration du réfrigérant peut être réglée(s) en amont du compresseur sur un côté de basse pression (27) du circuit de refroidissement.

16. Chambre d'essai selon l'une quelconque des revendications précédentes,
**caractérisée en ce**
**qu'**une troisième dérivation (49) ayant au moins une deuxième vanne magnétique (51) est formée dans le circuit de refroidissement (17), la troisième dérivation contournant l'élément de détente (21) en aval du condensateur (20) et en amont de l'élément de détente dans le sens d'écoulement, la deuxième vanne magnétique permettant de doser le réfrigérant de telle manière qu'une température de gaz d'aspiration et/ou une pression de gaz d'aspiration du réfrigérant peut être réglée(s) en amont du compresseur sur un côté de basse pression (27) du circuit de refroidissement.

17. Chambre d'essai selon la revendication 15 ou 16,
**caractérisée en ce que**
le dispositif de régulation de température (11) comprend une unité de commande ayant au moins un capteur de pression (30) et/ou au moins un capteur de température (29, 38) dans le circuit de refroidissement (17), des vannes magnétiques (36, 48, 51) pouvant être actionnées par l'unité de commande en fonction d'une température et/ou d'une pression mesurée(s).
